Europäisches Patentamt

European Patent Office

Office européen des brevets

(19)

(11) **EP 0 666 804 B1**

(12) **EUROPÄISCHE PATENTSCHRIFT**

(45) Veröffentlichungstag und Bekanntmachung des Hinweises auf die Patenterteilung:
**03.09.1997 Patentblatt 1997/36**

(21) Anmeldenummer: 93924055.2

(22) Anmeldetag: 27.10.1993

(51) Int. Cl.[6]: **B60L 5/00**, B60L 15/00, B60L 13/03

(86) Internationale Anmeldenummer:
**PCT/EP93/02973**

(87) Internationale Veröffentlichungsnummer:
**WO 94/10003 (11.05.1994 Gazette 1994/11)**

(54) **ANORDNUNG ZUR INDUKTIVEN ÜBERTRAGUNG VON ENERGIE AUF BEWEGBARE VERBRAUCHER**

ARRANGEMENT FOR THE INDUCTIVE TRANSFER OF ENERGY TO MOVABLE CONSUMERS

AGENCEMENT DE TRANSFERT INDUCTIF D'ENERGIE SUR DES CONSOMMATEURS MOBILES

(84) Benannte Vertragsstaaten:
**AT BE CH DE DK ES FR GB GR IT LI LU NL SE**

(30) Priorität: 28.10.1992 DE 4236340

(43) Veröffentlichungstag der Anmeldung:
**16.08.1995 Patentblatt 1995/33**

(73) Patentinhaber: **Daimler-Benz Aktiengesellschaft 70546 Stuttgart (DE)**

(72) Erfinder: **SEELIG, Anton D-65439 Flörsheim (DE)**

(56) Entgegenhaltungen:
EP-A- 0 289 968      WO-A-92/17929
GB-A- 657 036

- **PATENT ABSTRACTS OF JAPAN vol. 7, no. 227 (M-248)(1372) 7. Oktober 1983 & JP,A,58 119 701 (KOUICHI TOTSUGI) 16. Juli 1983**
- **ELEKTRISCHE BAHNEN Bd. 82, Nr. 3 , März 1984 , MUNCHEN DE Seiten 82 - 86 KARL DREIMANN ET AL. 'Antriebs- und Energieversorgungssyteme für Magnetschwebebahnen'**

**Beschreibung**

Die Erfindung betrifft eine Anordnung zur induktiven Übertragung von Energie auf bewegbare Verbraucher nach dem Oberbegriff des Anspruchs 1.

Elektrische Energie ist nach dem Induktionsprinzip über Luftspalte berührungsfrei übertragbar. Für das Überwinden größerer Spaltweiten sind Mindestwerte der Frequenz und des Querschnitts des magnetischen Wechselfeldes erforderlich, damit der dieses Feld erzeugende Magnetisierungsstrom in der Größenordnung des zu übertragenden Wirkstromes bleibt.

Der Vorteil, eine elektrische Leistung bei hoher Frequenz in einem kleinen Volumen übertragen zu können, gilt auch für das elektrische Feld der Kondensatoren. Durch die Wahl geeigneter weichmagnetischer und dielektrischer Werkstoffe wird außerdem erreicht, daß die auf die übertragene Leistung bezogenen Verluste der Bauelemente zurückgehen, d. h. die Wirkungsgrade ansteigen. So wie Spannungswandlungen bei der Energieübertragung über große Entfernungen den Materialaufwand, den Spannungsabfall und die Energieverluste der Leitungen reduzieren, ermöglicht die Mittelfrequenz-Energieübertragung erhebliche Einsparungen an Volumen, Gewicht und Verlusten bei allen elektromagnetischen Bauelementen und Kondensatoren.

Die Vorteile der Mittelfrequenz-Energieübertragung werden in vielen Anwendungen deutlich spürbar, wenn die Frequenz von 50 Hz oder 400 Hz in den Frequenzbereich über 20 kHz gelegt wird.

Für diesen Frequenzbereich sprechen folgende Gründe:

- Geräuscheprobleme entfallen.
- Frequenzen bis 100 kHz sind mit den verfügbaren Halbleiterbauelementen auch noch bei Leistungen über 10 kW mit vertretbarem Aufwand zu erzeugen.
- Die Funkschutzbestimmungen können in diesem Bereich leichter eingehalten werden.

Diese Technik eröffnet vielfältige neue Möglichkeiten und bietet gegenüber der leitungsgebundenen Energieübertragung folgende allgemeine Vorteile:

- kein Verschleißen von Kabeln durch Knicken, Verdrehen oder Nachschleppen,
- größere Beweglichkeit, erweiterter Aktionsbereich,
- Leichtgängigkeit bei austauschbaren Modulen, weil Kontaktkräfte entfallen,
- Vermeiden von Lichtbögen und Abrieb an Kontakten oder Schleifbahnen von Stromabnehmern,
- in explosionsgefährdeter Umgebung wie im Bergbau einsetzbar,
- Potentialtrennung, Schutz vor Berührungsspannung, hohe Isolationsfestigkeit des Spaltes.

Einsatzmöglichkeiten für berührungslose Energieübertragung ergeben sich insbesondere für entlang eines Stators bewegbare Verbraucher wie Magnetbahnen, Transportwagen oder Roboter.

Bereits bekannt ist eine Anordnung zur berührungsfreien Leistungsübertragung Leistungsübertragung auf verschiebbare und leicht austauschbare Sitzgruppen von Passagierflugzeugen (IEEE Transactions on Power Electronics, Vol. 4 (1989) S. 348 - 354). Dabei sind primärseitig Leiterschleifen in den Boden eingelassen und kunststoffummantelte Sekundärsysteme an den Stützern der Sitzgruppen montiert. Mit der auf die Sitzgruppen übertragenen Leistung werden "Entertainment Sets" in den Rückenlehnen der Sitze, die u.a. ein kleines Fernsehgerät für jeden Passagier enthalten, gespeist.

Ein Nachteil dieser Anordnung ist, daß sie nur zur Übertragung von kleinen Leistungen geeignet ist und daß von den Streufeldern der Anordnung in andere Leitungen, die in der Nähe und parallel zu den Statorschleifen verlaufen, Störungen induziert werden.

Geringere Streufelder treten bei der Verwendung von Wechselpolen auf, d. h. Induktivitäten, deren Pole entlang der Statorrichtung alternieren. Hierbei besteht allerdings das Problem, daß bei der Bewegung einer Schleife über die Wechselpole Stellungen erreicht werden, bei denen keine magnetische Kopplung zwischen dem Primär- und dem Sekundärsystem besteht. Darberhinaus besteht das Problem, daß bei einer Reihenschaltung von Primärspulen des Stators nur einer im Verhältnis zum Stator kleinen Sekundärspule in den Spulen der unbedeckten Statorabschnitte ein großer induktiver Spannungsabfall auftritt, der die Energieübertragung reduziert.

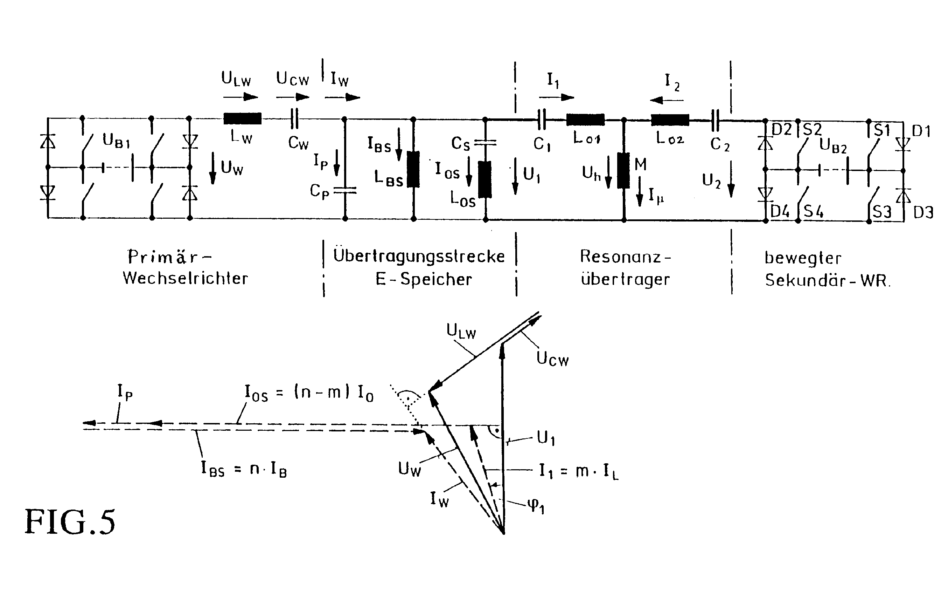

Der Nachteil eines großen induktiven Spannungsabfalls ist bei der in der Zeitschrift ELEKTRIE 34 (1980), H. 7, S. 339 - 341 beschriebenen induktiven Energieübertragung durch die Reihenschaltung von Kompensationskondensatoren mit den Leitern der ruhenden Primärseite sowie der bewegten Sekundäranordnung vermieden. Die Reihenschaltung aller Übertragungsleitungen und Kondensatoren bewirkt, daß bei dem Betrieb mehrerer bewegter Sekundäranordnungen an einem gemeinsamen Primärteil der Sekundärsysteme, wie im Bild 2, ELEKTRIE 34 (1980), S. 339 gezeigt wird, elektrisch in Reihe geschaltet sind, so daß die Sekundärsysteme ihre Stromaufnahme nicht unabhängig voneinander einstellen können. Diese nachteilige elektrische Reihenschaltung aller Sekundärsysteme ist auch bei dem in den IEEE-Transactions on Power Electronics, Vol. 4, 1989, S. 349 ff beschriebenen Übertragungssystem, wie Fig. 5 auf S. 350 zeigt, gegeben.

Bei der in der Zeitschrift ELEKTRIE beschriebenen Leiteranordnung des Primärteils mit parallelen, in 400 mm Abstand verlegten Leitungen für das Übertragen von Leistungen zum Betreiben von Grubenlokomotive sind die Streufelder und die in benachbarten in Anzeigen induzierten Störungen noch um Größenordnungen stärker als bei dem Übertragungssystem zum Speisen von "Entertainment Sek".

Die Aufgabe der vorliegenden Erfindung besteht darin, eine Anordnung zur individuellen berührungslosen Übertragung von Energie auf einen oder mehrere bewegbare Verbraucher anzugeben, bei der die Strom- und Leistungsaufnahme jedes Verbrauchers unabhängig von den anderen Verbrauchern einstellbar ist und die eine höhere Übertragungsleistung bei geringen Störfeldern ermöglicht.

Die Aufgabe wird durch die Merkmale des Patentanspruchs 1 gelöst. Vorteilhafte Ausgestaltungen der Erfindung sind in den Unteransprüchen enthalten.

Die Erfindung beruht auf der Idee, bei einer primärseitig aus einem Stator mit Statorspulen und sekundärseitig aus einem oder mehreren induktiv an den Stator gekoppelten Verbrauchern bestehenden Energieübertragungsanordnung Gruppen von mehreren in Reihe geschalteten Statorspulen und strombegrenzenden Kondensatoren C parallel an eine Mittelfrequenz-Sammelleitung anzuschließen. Dabei sind die Gruppen so zu bemessen, daß der Kondensator C in jeder nicht an einen Verbraucher gekoppelten Gruppe den größten komplexen Widerstand bildet und damit strombegrenzend wirkt. Am Ort eines Verbrauchers schließen sich die magnetischen Kreise von Stator und Verbraucher und erhöhen die induktiven Widerstände der Spulengruppen. Diese kommen daher mit den Kondensatoren in Resonanz. Das ist die wesentliche Voraussetzung für den Energietransport.

Die Leistungsstellung wirkt für jeden Verbraucher individuell über einen Wechselrichter auf der Sekundärseite des Übertragungssystems. Da sich beim Stellen im wesentlichen nur der Energieinhalt in dem vom jeweiligen Sekundärsystem bedeckten Statorabschnitt ändert, ist durch das sekundärseitige Stellen bereits eine gute Stelldynamik realisierbar, die durch synchronisiertes beidseitiges Stellen noch verbessert werden kann.

Leerlaufende, d. h. nicht bedeckte Spulengruppen belasten die Sammelleitung und den speisenden Primär-Wechselrichter nicht, da die nicht bedeckten Spulengruppen nur einen geringen induktiven Widerstand haben und die Kondensatoren den Leerlaufstrom $I_0$ begrenzen.

Diese mit keinem Leistungsumsatz verbundenen kapazitiven Blindströme werden durch die entgegengesetzt gerichteten induktiven Blindströme $I_B$ der Induktivitäten $L_B$ kompensiert.

Im folgenden wird die Erfindung mit Hilfe von Zeichnungen genauer erläutert.

Es zeigt:

Fig. 1     eine erfindungsgemäße Anordnung zur berührungslosen Energieübertragung;

Fig. 2     den räumlichen Verlauf der magnetischen Flußdichte und der sekundärseitig induzierten Spannungen;

Fig. 3     Ausführungsbeispiele von Wechselrichtern für die Sekundärsysteme;

Fig. 4     Ersatzschaltbilder und Zeigerdiagramme für das Zusammenwirken eines Reihenkondensators mit einer Spulengruppe ohne sekundären Wechselrichter;

Fig. 5     ein Ersatzschaltbild mit Zeigerdiagramm für die Anordnung gem. Fig. 1;

Fig. 6     den zeitlichen Verlauf von Strömen und Spannungen des Resonanzübertragers in Fig. 5 bei einer speziellen, sekundärseitiges Konstantstromverhalten bewirkenden Dimensionierung;

Fig. 7     Zeigerdiagramme der Ströme und Spannungen des Resonanzübertragers nach Fig. 5 bei einer von den idealen Verhältnissen nach Fig. 6 abweichender Dimensionierung;

Fig. 8     eine bevorzugte Ausführungsform eines sekundärseitigen Wechselrichters mit Steuer- und Regelsystem zur Spannungskonstanthaltung und

Fig. 9     eine Kombination eines berührungslosen Übertragungssystems mit einem Linearantrieb.

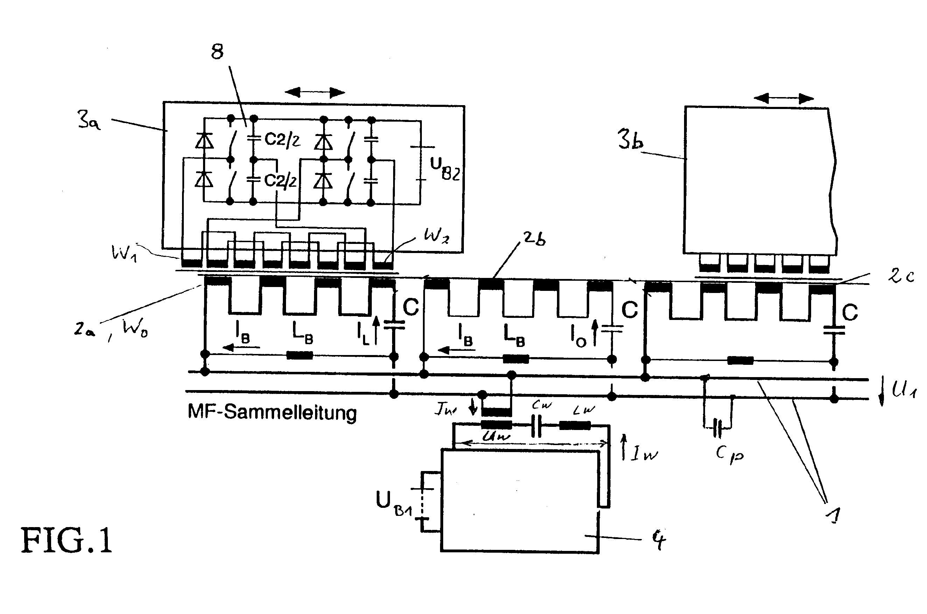

Figur 1 zeigt schematisch eine erfindungsgemäße Anordnung zur berührungslosen Energieübertragung auf mehrere Verbraucher.

Hierbei bezeichnet 1 eine Mittelfrequenzsammelleitung, an der Gruppen 2a, 2b, 2c von mehreren als Wechselpole in Reihe geschalteten Spulen mit strombegrenzenden Kondensatoren C parallel angeschlossen sind.

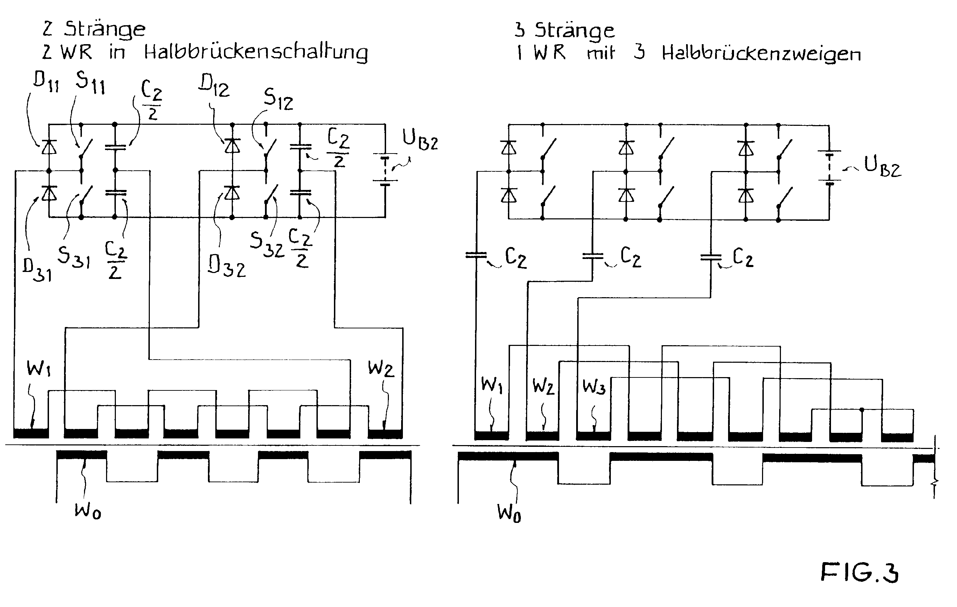

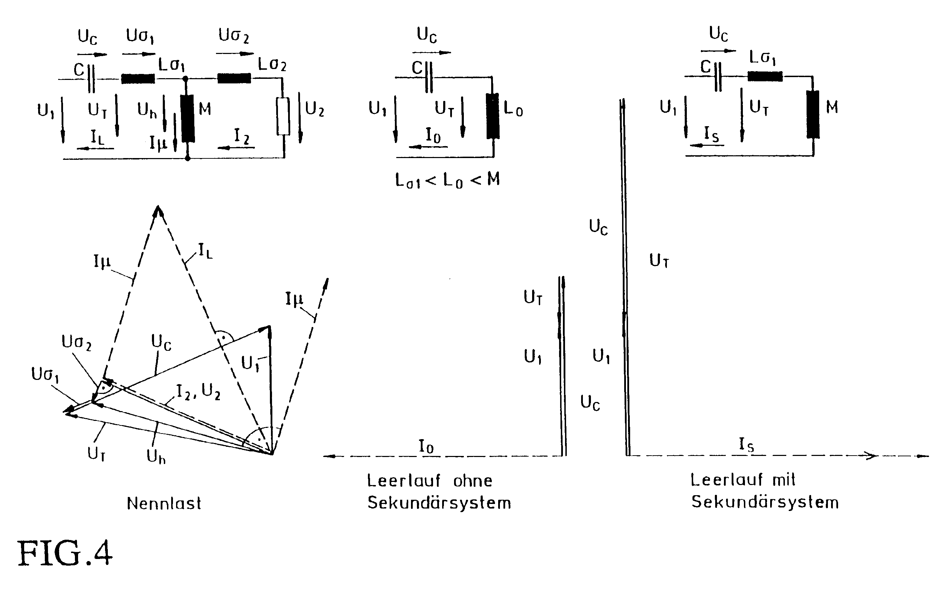

Die Spulengruppen 2a und 2c sind jeweils induktiv an die bewegbaren Verbraucher 3a bzw. 3b angekoppelt; die betreffenden primärseitigen Spulen sind von den sekundärseitigen Spulen bedeckt. Beim Verbraucher 3a ist eine zweisträngige Ausführung der Sekundärwicklung verwendet; auf den entsprechenden Wechselrichter wird im Zusammenhang mit Fig. 3 näher eingegangen. Beim Ausgang des Wechselrichters steht die Gleichspannung $U_{B2}$ zur Verfügung. Der Primärwechselrichter 4 erzeugt aus der Betriebsspannung $U_{B1}$ die Wechselspannung $U_W$ und damit die Spannung $U_1$ der Mittelfrequenzsammelleitung 1. Das Übertragungsverhalten der Anordnung nach Fig. 1 wird im Zusammenhang mit den Figuren 4 bis 8 genauer beschrieben.

Die Mittelfrequenz-Sammelleitung kann aus dünnen geschichteten Kupferbändern aufgebaut werden, wobei sich Hin- und Rückleiter in aufeinanderfolgenden Schichten abwechseln. Die Banddicke ist dabei etwas kleiner als die Eindringtiefe des Stromes, die bei 25 kHz in Kupfer 0,4 mm beträgt. Die Dicke des Kupferbandes und die Dicke der zwischen Hin- und Rückleitern liegenden Isolierfolie können so gewählt werden, daß der ohmsche und induktive Leitungswiderstand etwa gleich groß sind. Die zu übertragende Stromstärke und der zulässige Spannungsabfall bestimmen die Breite und die Zahl der Bänder. Eine derartige Leitung hat einen sehr kleinen Induktivitätsbelag L', der reziprok zur Breite und Anzahl der Bänder abnimmt, und einen proportional mit der Anzahl und Breite der Bänder ansteigenden Kapazitätsbelag C'.

Der Wellenwiderstand

$$\mathfrak{Z} = \sqrt{L' / C'}$$

einer Leitung für etwa 20 A beträgt nur wenige Ohm.

Nimmt man an, daß die Wellenausbreitungsgeschwindigkeit auf der Sammelleitung

$$c_w = 1 / \sqrt{L' \cdot C'}$$

durch die Dielektrizitätskonstante der isolierenden Schichten auf minimal

$$C_w \approx 10^5 \text{ km/s}$$

reduziert ist, so beträgt die Wellenlänge auf der Leitung bei 25 kHz:

$$\lambda_w \approx 4 \text{ km.}$$

Bis zu Leitungslängen von etwa

$$\lambda_w / 10 = 0,4 \text{ km}$$

können die Spulengruppen eines Stators bei 25 kHz über eine Leitung mit niedriger Impedanz und definiertem Bezugspotential weitgehend reflexionsfrei untereinander und mit den Wechselrichtern verbunden werden.

Die Leitungskapazitäten sind unproblematisch, weil sie zu bereits vorhandenen Kondensatoren $C_P$ eines Systems, beispielsweise von Parallelschwingkreisen, parallel liegen. Derartige Schaltprinzipien sind bei der Übertragung von Mittelfrequenzleistung wegen des weitgehend oberschwingungsfreien Spannungsverlaufes und der niedrigen Reaktanzen gegenüber höherfrequenten Störungen von Vorteil.

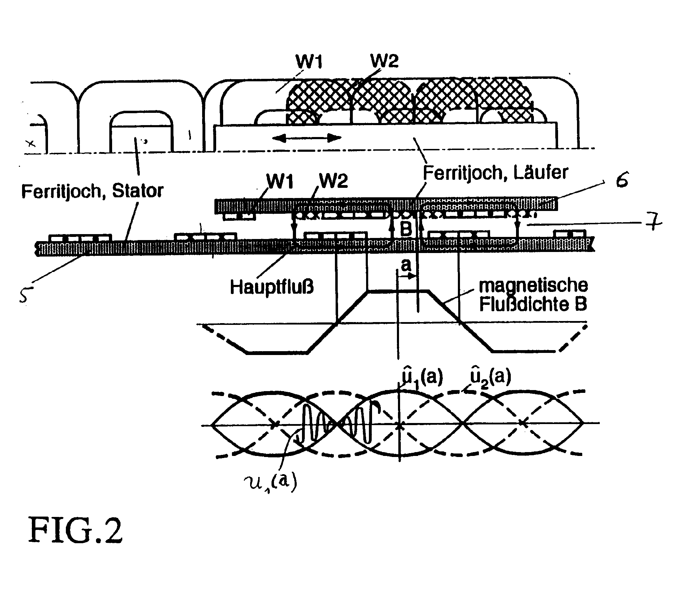

Fig. 2 veranschaulicht den räumlichen Verlauf der magnetischen Flußdichte B in einem von einem Sekundärsystem bedeckten Abschnitt des Stators und der sekundärseitig induzierten Spannungen. Bei dem in Fig. 2 gezeigten Übertrager liegen die Wicklungen der Spulen auf dünnen Ferritjochen 5, 6. Bei kleineren Spaltweiten ist es vorteilhaft, die Wicklungen wie bei elektrischen Maschinen in Nuten zu betten. Da benachbarte Spulen entgegengesetzt vom Strom durchflossen werden, heben sich die magnetischen Feldkomponenten in einem größeren Abstand vom unbedeckten Teil des Stators auf. In dem Spalt 7 zwischen Stator und Sekundärsystem hat die magnetische Flußdichte einen trapezförmigen Verlauf.

Sie induziert in den Wicklungen W1, W2, die aus Reihenschaltungen symmetrisch versetzter Spulen bestehen, mittelfrequente Spannungen $U_1(a)$ und $U_2(a)$, die von der Verschiebung a zwischen Stator und Sekundärsystem abhängig sind. Die in Fig. 2 dick und gestrichelt ausgezogenen Funktionen $\hat{U}_1(a)$ und $\hat{U}_2(a)$ sind die Hüllkurven der Scheitelwerte der mittelfrequenten Spannungen $U_1(a)$ und $U_2(a)$. In Analogie zu den Wicklungen elektrischer Maschinen reichen zwei oder drei symmetrisch versetzte sekundäre Wicklungsstränge aus, damit in jeder beliebigen Stellung des Sekundärsystems die gleichen Übertragungsbedingungen vorliegen.

Ein Stromrichter, im einfachsten Fall ein Brückengleichrichter, wählt dann stets den Strang mit der höchsten Induktionsspannung, d. h. mit der besten Kopplung zum Primärsystem für die Leistungsübertragung aus und richtet dessen Strangstrom gleich.

Bei einem Übertragungssystem gem. Fig. 2 werden durch die Leiteranordnung wechselnde Pole entlang des Stators erreicht.

Die jedem Pol bzw. den Windungen eines Pols zuzuordnenden magnetischen Leitwerte sind der magnetische Hauptleitwert $\lambda_h$ der je Strang und Pol gekoppelten Windungen von Primär- und Sekundärwicklung, die jedem $\lambda_h$ zuzuordnenden primär- und sekundärseitigen Streuleitwerte $\lambda_\sigma$, und der magnetische Leitwert $\lambda_0$, des nur mit den Primärwindungen verketteten magnetischen Kreises eines von einem Sekundärsystem nicht bedeckten Statorpols. Der magnetische Leitwert $\lambda_0$ der unbedeckten Pole ist größer als der Streuleitwert $\lambda_\sigma$, aber kleiner als der Hauptleitwert $\lambda_h$ eines von einem Sekundärsystem bedeckten Pols. Mit $\lambda_0 < \lambda_h$ gilt auch, daß die Induktivität $L_0$ sowie die Reaktanz $X_0$ der vom Sekundärsystem nicht bedeckten Spulen oder Spulengruppen kleiner als die Gegeninduktivität M und die Hauptreaktanz $X_M$ der unter dem Sekundärsystem liegenden Spulen ist. Der parallele Betrieb von bedeckten und nicht bedeckten Spulen oder Spulengruppen in einer gemeinsamen Mittelfrequenzsammelleitung ist daher nur möglich, wenn der in Fig. 1 zu den Spulengruppen in Reihe geschaltete Kondensator C den Leerlaufstrom $I_0$ einer unbedeckten Spulengruppe annäherd auf den Wert des Stromes $I_L$ begrenzt, den eine Spulengruppe beim Übertragen der Nennleistung auf das Sekundärsystem aufnimmt. Zur Kompensation des kapazitiven Leerlaufstromes $I_0$ ist zu jeder Reihenschaltung aus Spulengruppe und Kondensator eine Induktivität $L_B$ parallel geschaltet.

In Fig. 3 sind für zwei- bzw. dreisträngige Ausführungen der Sekundärwicklung die jeweils erforderlichen mehrsträngigen Resonanzwechselrichter auf der Sekundärseite des Übertragungssystems dargestellt. Hierbei bilden die mit den Sekundärwicklungen in Reihe geschalteten Kondensatoren C2 und 2 C2/2, wie bei dem Resonanzübertrager in Fig. 5 gezeigt, mit den sekundärseitigen Streuinduktivitäten $L_{2\sigma}$ Reihenresonanzkreise.

Bei zwei Wicklungssträngen ist mit dem Anschluß eines Wechselrichters in Halbbrückenschaltung an jeden Wicklungsstrang der minimale Aufwand realisiert. In einer Stellung des Sekundärsystems mit maximaler Kopplung zwischen der Statorwicklung und einem sekundären Wicklungsstrang erfolgt die Leistungsübertragung nur über diesen sekundären Wicklungsstrang und den zugeordneten Resonanzwechselrichter. Ist die Kopplung von der Statorwicklung zu beiden Sekundärsträngen gleich groß, wird die Leistung über beide Stränge und Wechselrichter parallel übertragen. Für eine dreisträngige Wicklung ist die Brückenschaltung mit drei Zweigen prädestiniert.

In der Stellung der maximalen Kopplung zwischen der Statorwicklung und zwei in Reihe geschalteten Strängen der Sekundärwicklung erfolgt die Energieübertragung über diese beiden Sekundärstränge und einen aus zwei Zweigen gebildeten Wechselrichter in Brückenschaltung. Nach einer Verschiebung des Sekundärsystems um ein Sechstel $\tau_p$ ($\tau_p$ = Polteilung) ist die Kopplung der Statorwicklung zu zwei sekundären Wicklungssträngen gleich und im dritten Strang maximal. Die beiden gleichberechtigten Stränge werden in dieser Stellung über die zugehörigen Brückenzweige untereinander parallel und mit dem dritten Wicklungsstrang und Brückenzweig in Reihe geschaltet betrieben. Sowohl beim zweisträngigen als auch beim dreisträngigen Sekundärsystem ist die Stellung mit gleicher Kopplung zwischen Statorwicklung und zwei Strängen der Sekundärwicklung die eines Bereichs, in dem sich zwei Wicklungsstränge und Wechselrichterzweige in der Stromführung ablösen.

Im folgenden wird die Wirkungsweise der erfindungsgemäßen Anordnung genauer erklärt. Hierbei wird von folgenden Überlegungen ausgegangen:

- Bei allen vom Sekundärsystem nicht bedeckten Spulengruppen bildet der in Reihe geschaltete Kondensator die dominierende Reaktanz im Stromkreis und begrenzt die Stromaufnahme.
- An einem vom Sekundärsystem bedeckten Statorabschnitt stimmen die Beträge der Reaktanzen einer Spulengrupe und des in Reihe geschalteten Kondensators annähernd überein. Diese Resonanz ist die Voraussetzung für den Energietransport auf das Sekundärsystem.
- Die Resonanzüberhöhung und die übertragene Leistung sind nicht von einer zufälligen Belastung auf der Sekundärseite abhängig, sondern werden von den sekundärseitigen Wechselrichtern eingestellt.

Das prinzipielle Zusammenwirken des Reihenkondensators C mit einer Spulengruppe wird anhand der Ersatzschaltungen und Zeigerdiagramme der Fig. 4 betrachtet. Im linken Bildteil von Fig. 4 wurde Nennlast mit gleichen Beträgen von Laststrom $I_2$ und Magnetisierungsstrom $I_\mu$ angenommen.

Die Reaktanz des Eingangskondensators berechnet sich aus der Ersatzschaltung der unbedeckten Spulengruppe in der Mitte der Fig. 4, deren Stromaufnahme $|I_0|$ kleiner als der bei Nennlast aufgenommene Strom $I_L$ bleiben soll.

Die Ersatzschaltung und das Zeigerdiagramm rechts in Fig. 4 zeigen den Betriebszustand einer Statorspulengruppe in Resonanznähe ohne Belastung und sekundärseitigen Wechselrichter. Mit dem Wechselrichter werden in der Nähe des Resonanzpunktes des primärseitigen Reihenschwingkreises die anhand der Figuren 5 bis 7 beschriebenen günstigen Bedingungen für das Übertragen und Einstellen der Leistung erreicht.

Zur Darstellung der prinzipiellen Beziehungen zwischen den Spannungen und Strömen des in Fig. 1 gezeigten Übertragungssystems mit parallelen Spulengruppen im Stator wird dieses durch die Ersatzschaltung in Fig. 5 ersetzt. Sie ist in vier Funktionseinheiten

- Primärwechselrichter,
- Übertragungsstrecke,
- Resonanzübertrager
- sekundärer Wechselrichter

gegliedert.

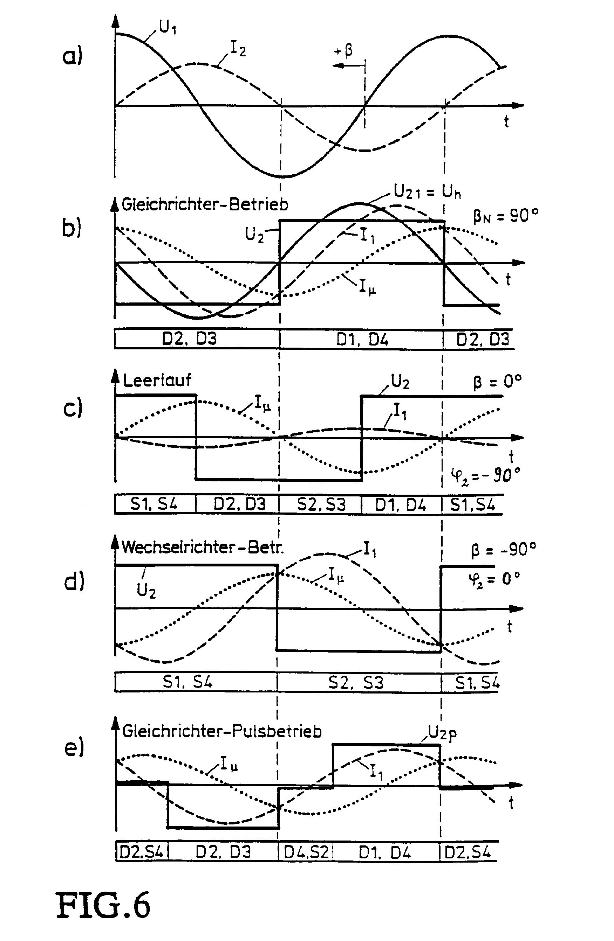

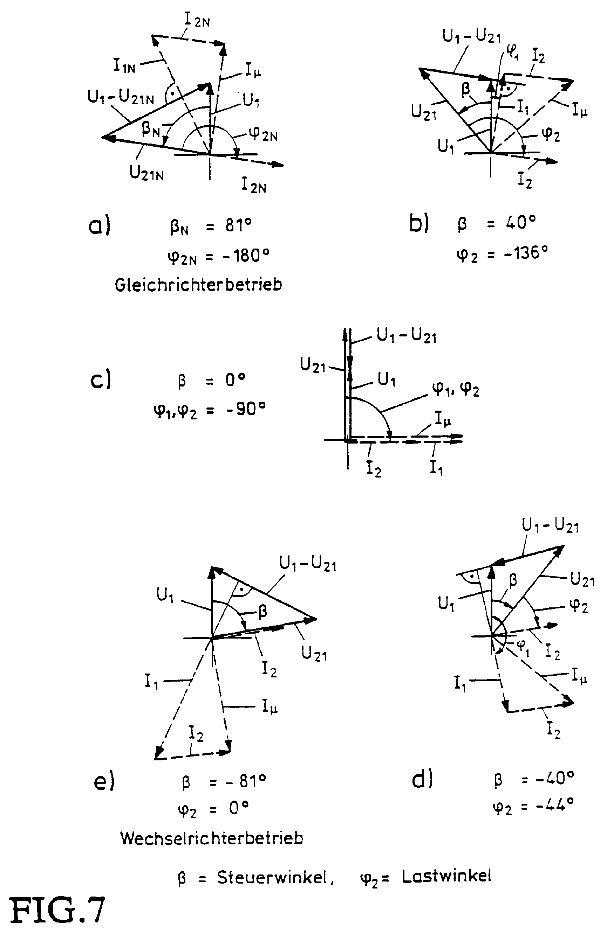

Das Zeigerdiagramm in Fig. 5 veranschaulicht die Größenverhältnisse und Phasenbeziehungen der Spannungen und Ströme vom Ausgang des Primärwechselrichters bis zum Eingang des Resonanzübertragers. Die Beziehungen zwischen den Spannungen und Strömen des Resonanzübertragers werden weiter unten bei der Betrachtung des Stellverfahrens abgeleitet. Sie sind in den Fig. 6 und 7 für zwei nach unterschiedlichen Betriebsbedingungen ausgelegten Beispielen dargestellt.

Der Primärwechselrichter speist die zu übertragende Leistung in die Übertragungsstrecke ein oder liefert von dem Sekundärsystem abgegebene Leistung an die Spannungsquelle $U_{B1}$ zurück. In dem Beispiel ist der Streckenwechselrichter über den aus der Induktivität $L_W$ und der Kapazität $C_W$ gebildeten Reihenschwingkreis an die Übertragungsstrecke gekoppelt. Da diese einen bei konstanter Spannung $U_1$ betriebenen Parallelschwingkreis darstellt, sind auch Parallelschwing-Wechselrichter für die Speisung der Übertragungsstrecke geeignet.

Die Prinzipschaltbilder zeigen aus Gründen der Vereinfachung Wechselrichter, die an eine Gleichspannungsquelle angeschlossen sind. Für die praktische Realisierung der Übertragungssysteme sind vor allem Direktumrichter von Bedeutung. Sie ermöglichen die bidirektionale Leistungsübertragung zwischen der Mittelfrequenzsammelleitung und einem Niederfrequenz-Netz ohne Gleichspannungs- oder Gleichstrom-Zwischenkreis.

Im Ersatzschaltbild der Übertragungsstrecke sind alle an die MF-Sammelleitung der Fig. 1 angeschlossenen Induktivitäten und Kapazitäten des vom Sekundärsystem unbedeckten Stators zusammengefaßt. Die Reihenschaltung aus der Induktivität $L_{0S}$ und der Kapazität $C_S$ repräsentiert (n - m) unbedeckte Spulengruppen mit der Induktivität $L_0$ und der in Reihe geschalteten Kapazität C. Die Induktivität $L_{BS}$ entspricht der Parallelschaltung aller zur Kompensation der kapazitiven Leerlaufströme $I_0$ eingesetzten Blindstromdrosseln $L_B$ . Ersatzkapazität $C_S$ und Ersatzinduktivität $L_{BS}$ sind die dominierenden Energiespeicher bei einem längeren Übertragungsstator mit parallelen Spulengruppen und geben der Übertragungsstrecke das Verhalten eines Parallelschwingkreises.

Damit sprunghafte, durch das Schalten der Leistungshalbleiter verursachte Spannungsänderungen nicht über die MF-Sammelleitung übertragen werden sind zu dieser in Fig. 1 und im Ersatzschaltbild Fig 5 die Kondensatoren C parallelgeschaltet.

Das Ersatzschaltbild des Resonanzübertragers entspricht in seiner Funktion einem aus m Statorspulengruppen und der bewegten Sekundärwicklung gebildeten Transformator mit primär- und sekundärseitig zu den Wicklungen in Reihe geschalteten Kondensatoren.

Diese Ersatzschaltung mit einem sekundären Wicklungsstrang gilt für die Läuferstellungen mit maximaler Sekundärspannung exakt. Da die Maxima der Sekundärspannungen nur $\tau_P/4$ bei zweisträngiger und $\tau_P/6$ bei dreisträngiger Wicklung auseinanderliegen, wird bezüglich des grundsätzlichen Systemverhaltens kein wesentlicher Fehler von der Betrachtung nur eines Wicklungsstrangs erwartet.

In der einsträngigen Ersatzschaltung ist das Ersetzen der in Fig. 3 gezeigten Wechselrichter-Schaltprinzipien durch eine Brückenschaltung für das Verstehen von Vorteil.

Bei konstanter Spannung $U_1$ der Übertragungsstrecke bestimmt der sekundärseitige Wechselrichter, wie weiter unten gezeigt wird, Amplitude und Phasenwinkel $\varphi_1$ des Stromes $I_1$ am Eingang des Resonanzübertragers. Zu diesem Strom sind die über die ganze Übertragungsstrecke aufsummierten kapazitiven Blindströme $I_{0S}$, $I_P$ und der aufsummierte induktive Blindstrom $I_{BS}$ addiert. Der resultierende Gesamtstrom $I_W$ ist der Ausgangsstrom des Primärwechselrichters. Der große, zur Spannung $U_1$ gestrichelte senkrechte Zeiger veranschaulicht die Summierblindströme der Übertragungsstrecke. Im realen System treten die Summenblindströme wegen der abschnittweise, in Fig. 1 für jede Spulengruppe, ausgeführten Kompensation nicht auf.

Wegen der Konstanz der Spannung $U_1$ auf der Übertragungsstrecke ist auch deren Energieinhalt konstant und von der zu übertragenden Leistung unabhängig. Die Kompensationsdrosseln $L_B$ und der zur Ankopplung der Übertragungsstrecke an den Primärwechselrichter dienende Reihenschwingkreis aus der Induktivität $L_W$ und der Kapazität $C_W$ sind so ausgelegt, daß der Primärwechselrichter bei der maximal übertragenen Leistung annähernd ohmsch belastet ist.

Nachfolgend werden die Abhängigkeit der zu übertragenden Leistung von den Induktivitäten M, $L_{10}$, $L_{20}$ und den Kapazitäten $C_1$ und $C_2$ des Ersatzschaltbildes des Resonanzübertragers in Fig. 5 und das Einstellen dieser Leistung durch den Wechselrichter auf dem bewegten Sekundärsystem beschreiben.

Dabei wird angenommen, daß die Eingangsspannung $U_1$ und die Ausgangsspannung $U_2$, wie bei vielen Anwendungen, die eine konstante Gleichspannung $U_{B2}$ auf dem bewegten System erfordern, eine konstante Amplitude haben und das Einstellen der Ströme $I_1$, $I_2$, und $I_\mu$ durch Ändern des Phasenwinkels $\beta$ zwischen der Eingangsspannung $U_1$ und der Ausgangsspannung $U_2$ des Resonanzübertragers oder des Phasenwinkels $\varphi_2$ zwischen der Spannung $U_2$ und dem Stromnetz erfolgt. Zum Einstellen der in den Diagrammen der Fig. 6 und 7 veranschaulichten Phasenwinkel $\beta$ oder $\varphi_2$ sind lediglich die Ein- und Ausschaltpunkte, d. h. die leitenden Bereiche der Schalter S1, S2, S3 und S4 des sekundärseitigen Wechselrichters (Fig. 5) in der Winkellage zu der Spannung $U_1$ oder dem Strom $I_2$ durch eine Steuer- und Regeleinrichtung festzulegen. Die Schalter S1 bis S4 sind dabei, dem Stand der Technik entsprechend, als neuheitliche steuerbare Leistungshalbleiter, beispielsweise MOS-Transistoren oder IGBTs, ausgeführt.

Beim zyklischen Ein- und Ausschalten dieser Schalter erzeugt der Sekundärwechselrichter an dem Resonanzübertrager die in Fig. 5 symbolisch und in Fig. 6 im zeitlichen Verlauf dargestellte rechteckförmige Wechselspannung $U_2$. Für die Betrachtung der Übertragungseigenschaften, insbesondere die Berechnung der sich einstellenden Ströme $I_1$, $I_2$ und $I_\mu$ und der zu übertragenen Leistung ist nur die Grundschwingung $U_{21}$ der rechteckförmigen Spannung $U_2$ von Bedeutung. Für den Effektivwert dieser Grundschwingung gilt:

$$U_{21} = \frac{U}{\pi \cdot \sqrt{2}} \, U_2$$

Zwischen den in Fig. 7 als Zeiger dargestellten Grundschwingungseffektivwerten besteht in der kompletten Schreibweise der Zusammenhang:

$$U_{21} = U_1 \, V \cdot e^{j\beta}$$

Hierbei ist V das Amplitudenübersetzungsverhältnis des Konstantübertragers unter der Annahme gleicher Windungszahlen auf der steuernden Primärseite und der bewegten Sekundärseite und $\beta$ der durch die Steuerung des sekundärseitigen Wechselrichters einstellbare Winkel zwischen den Spannungszeigern von $U_1$ und $U_{21}$.

In Abhängigkeit von diesen Größen berechnen sich die Ströme des in Fig. 5 dargestellten Resonanzübertragers zu:

$$I_1 = U_1 \cdot [V \cdot \sin\beta - j \, (\frac{X_{\sigma2} - X_{02}}{X_M} - 1 + V \cos\beta)]/N \tag{2}$$

$$I_2 = U_1 \cdot \{(\frac{X_{\sigma1} - X_{01}}{X_M} - 1) \sin\beta - j \, [1 + (\frac{X_{\sigma1} - X_{01}}{X_M} - 1) \, V.\cos\beta]\}/N \tag{3}$$

$$I_\mu = U_1 \cdot \{\frac{X_{\sigma1} - X_{01}}{X_M} \, V . \sin\beta - j \, [\frac{X_{\sigma2} - X_{02}}{X_M} + \frac{X_{\sigma1} - X_{01}}{X_M} \, V . \cos\beta]\}/N \tag{4}$$

Die Funktion N des Nenners lautet dabei:

$$N = X_{\sigma1} - X_{01} - (X_{\sigma2} - X_{02}) \, (\frac{X_{\sigma1} - X_{01}}{X_M} - 1). \tag{5}$$

Für die Phasenwinkel $\varphi_1$ zwischen der Spannung $U_1$ und dem Strom $I_1$ auf der Eingangsseite sowie für den Phasenwinkel $\varphi_2$ zwischen der Spannung $U_{21}$ und dem Strom. $I_2$ auf der Ausgangsseite des Resonanzübertragers gelten die Beziehungen:

$$\tan \varphi_1 = \frac{1 - \frac{X_{\sigma2} - X_{02}}{X_M} - V \cdot \cos\beta}{V \cdot \sin\beta} \tag{6}$$

$$\tan ( \varphi_2 = 180°) = \frac{\cos\beta + V \, (\frac{X_{\sigma1} - X_{01}}{X_M} - 1)}{\sin\beta} \tag{7}$$

In diesen Gleichungen sind

$$X_1 = \frac{1}{\omega C_{<1}}, \, X_2 = \frac{1}{\omega C_2}$$

$$X_{01} = \frac{1}{\omega L_{01}}, \, X_{02} = \frac{1}{\omega L_{02}}, \, X_M = \frac{1}{\omega M}$$

die Reaktanzen des Resonanzübertragers bei der Kreisfrequenz $\omega = 2\pi f$, wobei f die durch den speisenden Primärwechselrichter erzeugte Frequenz der Eingangsspannung $U_1$ und des Übertragungssystems ist. Ein für die berührungsfreie Übertragung elektrischer Leistung auf das bewegte System besonders vorteilhaftes Übertragungsverhalten wird durch die Anpassung der Kondensatoren C1 und C2 für die Induktivitäten der Übertrageranordnung erreicht.

Wählt man die Kapazitätzwerte $C_1$ und $C_2$ so, daß die Bedingungen

$$X_{\sigma 1} - X_{01} - X_M = 0 \tag{8}$$

$$X_{\sigma 2} - X_{02} = 0 \tag{9}$$

erfüllt sind, dann lauten die Funktionen für die Ströme und den Winkel $\varphi_1$

$$I_1 = \frac{U_1}{X_{\sigma 1} - X_{01}} \cdot (V \cdot \sin\beta - j \, (V \cdot \cos\beta - 1) \tag{10}$$

$$I_2 = - j \, \frac{U_1}{X_{\sigma 1} - X_{01}} \tag{11}$$

$$I_\mu = \frac{U_1}{X_{\sigma 1} - X_{01}} V (\sin\beta - j \cdot \cos\beta) = \frac{U_{21}}{j \, X_M} \tag{12}$$

$$\tan \varphi_1 = \frac{1 - v \cdot \cos\beta}{V \cdot (\sin\beta} \tag{13}$$

Die Gleichungen (10) bis (13) zeigen die Eigenschaften der Übertrageranordnung unter den Bedingungen der Gleichungen (8) und (9), die besagen, daß der Eingangskondensator C1 mit der Eingangsinduktivität $L_{01}$ + M und der Ausgangskondensator C2 mit der ausgangsseitigen Streuinduktivität $L_{02}$ der Übertrageranordnung in Resonanz sind.

Dabei wird nach Gleichung (11) auf das bewegte System ein Strom $I_2$ übertragen, der von der Gegenspannung $U_2$ oder der Gleichspannung $U_{B2}$ auf dem bewegten System unabhängig ist.

Geht man davon aus, daß auf dem bewegten System ein Energiespeicher in Form einer Batterie oder eines Kondensators vorhanden ist, der die Spannung $U_{B2}$ zumindest für einen mehrere Perioden des übertragenen Stroms $I_2$ dauernden Zeitbereich konstant hält, so kann in diesem Zeitbereich die Leistung einfach durch die Winkellage $\varphi_2$ der Spannung $U_2$, d. h. der Grundschwingung $U_{21}$ gegenüber dem übertragenen Strom $I_2$ eingestellt werden. Für diese Leistung gilt die Beziehung:

$$P_2 = \frac{U_1^2}{X_{\sigma 1} - X_{01}} V (\cos\varphi_2 - j \cdot \sin\varphi_2) \tag{14}$$

Darin bedeutet der positive Bereich entsprechend den Pfeilrichtungen der Fig. 5 die von dem Sekundärwechselrichter gelieferte Wirkleistung und ein positiver Imaginärteil die vom Wechselrichter gelieferte induktive Blindleistung. Die Gleichung (14) entsprechende Leistungsgleichung für die Primärweiste berechnet sich aus der Gleichung (10) zu.

$$P_1 = \frac{U_1^2}{X_{\sigma 1} - X_{01}} [v \cdot \sin\beta + j \, (v \cos\beta - 1)] \tag{15}$$

Bei verlustfreiem Übertragungssystem muß die Summe der Realteile der Leistungsgleichungen (14) und (15) gleich Null sein.
Daraus folgen für die Winkel $\beta$ und $_2$ die Beziehungen:

$$\sin\beta = \cos\varphi_2 \text{ und } \beta = - (\varphi_2 + 90°) \tag{16}$$

Damit können der Eingangsstrom $I_1$ der Magnetisierungsstrom $I_\mu$, die Eingangsleistung $P_1$ und der primärseitige Phasenwinkel $\varphi_1$ als Funktion des sekundärseitigen Winkels $\varphi_2$ dargestellt werden:

$$I_1 = \frac{U_1}{X_{\sigma 1} - X_{01}} [- V \cdot \cos\varphi_2 + j \, ( v \cdot \sin\varphi_2 + 1)] \tag{17}$$

$$I_\mu = \frac{U_1}{X_{\sigma 1} - X_{01}} \, V \, (- \cos\varphi_2 + j \sin\varphi_2) \tag{18}$$

$$P_1 = \frac{- U_1{}^2}{X_{\sigma 1} - X_{01}} \, [V \cdot \cos\varphi_2 + j \, (v \cdot \sin\varphi_2 + 1)] \tag{19}$$

$$\tan\varphi_1 = \frac{1 + V \cdot \sin\varphi_2}{- V \cdot \cos\varphi_2} \tag{20}$$

Die Darstellung der Ströme und Leistungen des Resonanzübertragers in Abhängigkeit des auf dem bewegten System einstellbaren Winkels $\varphi_2$ zeigt die besondere Eignung des Verfahrens für die individuelle berührungslose Übertragung beliebig einstelbarer elektrischer Leistung auf mehrere, über demselben Primärsystem bewegte Sekundärsysteme. Der Stellbereich des Winkels $\varphi_2$ zwischen der Spannung $U_2$ und dem Strom $I_2$ des sekundärseitigen Wechselrichters erstreckt sich in den Diagrammen der Figuren 6 und 7 entsprechend von - 180 ° bis 0 °. Die zugehörigen Winkel $\beta$ liegen dabei nach der Beziehung zwischen + 90 ° und - 90 °.

Die Diagramme in Fig. 6 zeigen den zeitlichen Verlauf der Spannungen und Ströme sowie die Stromführungsbereiche der Halbleiter D1 - D4 und S1 bis S4 der Fig. 5. Im Diagramm a sind die Primärspannung $U_1$ und der um 90 ° nacheilende Sekundärstrom $I_2$ dargestellt.

Bei abgeschalteten Halbleiterschaltern S1 - S4 liegt reiner Gleichrichterbetrieb entsprechend Diagramm mit $\varphi_2$ = - 180 ° vor. Es zeigt die rechteckförmige Spannung $U_2$, deren Grundschwingung $U_{21} = U_n$ den Magnetisierungsstrom $I_\mu$ und den Primärstrom $I_1 = I_\mu - I_2$. Der Steuerwinkel beträgt in diesem Nennzustand $\beta_N$ = 90 °.

Werden während der Stromführung eines Diodenpaares D1, D4 oder D2, D3 die dazu parallelen steuerbaren halbleiterschalter S1, S4 oder S2, S3 des sekundärseitigen Wechselrichters von Fig. 5 geschlossen und nach dem Richtungswechsel des Stromes geöffnet, verschiebt sich die Winkellage der Wechselrichterspannung $U_2$ bzw. $U_{21}$ entsprechend der Abschaltverzögerung nacheilend gegenüber der Ausgangswinkellage im Gleichrichterbetrieb. Dabei nimmt der sekundärseitige Phasenwinkel $\varphi_2$ zu bzw. der Steuerwinkel $\beta$ ab, und der Betriebszustand des Wechselrichters geht von dem Gleichrichterbetrieb in den Wechselrichterbetrieb mit zunächst ohmsch-induktiver und dann ohmscher Last über.

Im Diagramm c werden die Halbleiterschalter entsprechend dem Winkel $\varphi_2$ = - 90 ° und $\beta$ = 0 angesteuert. Der Magnetisierungsstrom $I_\mu$ ist phasengleich mit dem Sekundärstrom $I_2$. Das bedeutet, daß der sekundärseitige Wechselrichter die Magnetisierungsblindleistung des Resonanzübertragers liefert und eine kleine, dem Differenzstrom $I_1$ entsprechende Blindleistung in die Übertragungsstrecke einspeist.

Der durch die Ansteuerung der Halbleiter S1 - S4 erzwungene und zum Gleichrichterbetrieb gegenphasige Verlauf der Spannung $U_2$ im Diagramm d der Fig. 6 kennzeichnet den Wechselrichterbetrieb mit ohmscher Last und Leistungsübertragung auf die Primärseite.

Durch einen Pulsbetrieb des sekundärseitigen Wechselrichters kann auch eine kleinere, nicht in einem konstanten Verhältnis zur Gleichspannung $U_{B2}$ stehende sekundärseitige Wechselspannung eingestellt werden. Das bedeutet eine von der sekundärseitigen Gleichspannung $U_{B2}$ unabhängige Reduktionsmöglichkeit des Spannungsverhältnisses v.

Das Diagramm in Fig. 6 zeigt den zeitlichen Verlauf einer sekundärseitigen Wechselspannung $U_{2p}$ für den Gleichrichter-Pulsbetrieb. Hierbei wird beispielsweise in der ersten Halbperiode während der Stromführung der Dioden D2 und D3 der Schalter S2 geschlossen, so daß bei der Richtungsumkehr des Stromes $I_2$ über diesen Schalter und die Diode D4 ein Freilaufkreis mit $U_2$ = 0 entsteht, bis der Schalter S2 abschaltet und die Diode D1 den Strom übernimmt.

Für die Darstellung der Diagramme in Fig. 6 wurden für die Praxis realistische Größen wie das Verhältnis der Streureaktanz zur Hauptreaktanz $X_{01} / X_M$ = 0,1 und das Amplitudenverhältnis $U_{21} / U_1$ = V = 1,4 gewählt. Diese Verhältnisse gelten auch für die Darstellung der Zeigerdiagramme in Fig. 7. Gegenüber den Diagrammen der Fig. 6 wurde jedoch angenommen, daß die Resonanzbedingung 8 nicht exakt erfüllt ist, sondern beispielsweise mit $(X_{21} - X_{01}) / X_M$ = 0,9 um 10 % vom Resonanzfall abweicht. In den Zeigerdiagrammen ändert daher der sekundärseitige Stromzeiger $I_2$ seine Länge und seine Winkellage zum Bezugszeiger $U_1$ ein wenig. Außerdem dreht sich der sekundärseitige Spannungszeiger $U_{21}$ nicht von $\beta$ = 90 bis $\beta$ = - 90 ° sondern nur in dem Winkelbereich von 81 ° bis - 81 °.

Das Diagramm a in Fig. 7 zeigt den Nennbetrieb, d. h. den Zustand bei sekundärseitigem Gleichrichterbetrieb. Den Reaktanzverhältnissen entsprechend stellt sich dabei der Nennsteuerwinkel $\beta_1$ = 81 ° zwischen der Primärspannung $U_1$ und der Grundschwingung $U_2$ der Sekundärspannung ein. Der Eingangsstrom $I_1$ hat, durch die Reaktanz des Eingangskondensators bedingt, nach Gleichung 17 eine kapazitive Komponente.

Die induktive Lastkomponente des Wechselrichters in den Diagrammen b bis d wird durch den Magnetisierungsstrom des Resonanzübertragers verursacht. Im Gleicherichterbetrieb liefert der Eingangsreihenkondensator den

gesamten Magnetisierungsstrom. Das Dreieck der Ströme im Diagramm b zeigt, daß bei dem Steuerwinkel $\beta = 40°$ der sekundärseitige Wechselrichter bereits einen erheblichen Teil des Magnetisierungsstromes übernimmt. Bei dem Steuerwinkel $\beta = 0°$ wird keine Leistung übertragen. Der Magnetisierungsstrom kommt, wie Diagramm c zeigt, zum überwiegenden Teil von dem sekundärseitigen Wechselrichter. Dadurch wird die im rechten Teil der Fig. 4 dargestellte, bei unbelastetem Übertrager kritische Resonanz der Eingangsinduktivität $L_{01} + M$ mit der in Reihe geschalteten Kapazität C bzw. $C_1$ vermieden. Der Eingangsstrom $I_1$ und damit auch die Spannung an dem Kondensator $C_1$ haben im Diagramm c der Fig. 4 sogar ein Minimum.

Im Bereich negativer Steuerwinkel $\beta$ ist der Energiefluß, wie die Winkel zwischen den Zeigerpaaren $U_{21}$, $I_2$ und $U_1$, $I_1$ des Diagramms d zeigen, von der Sekundär- zur Primärseite gerichtet. Die Magnetisierungsblindleistung wird nun wieder, zunehmend bis zum Steuerwinkel $\beta = 81°$ im Diagramm e, von dem Eingangsreihenkondensator C1 geliefert.

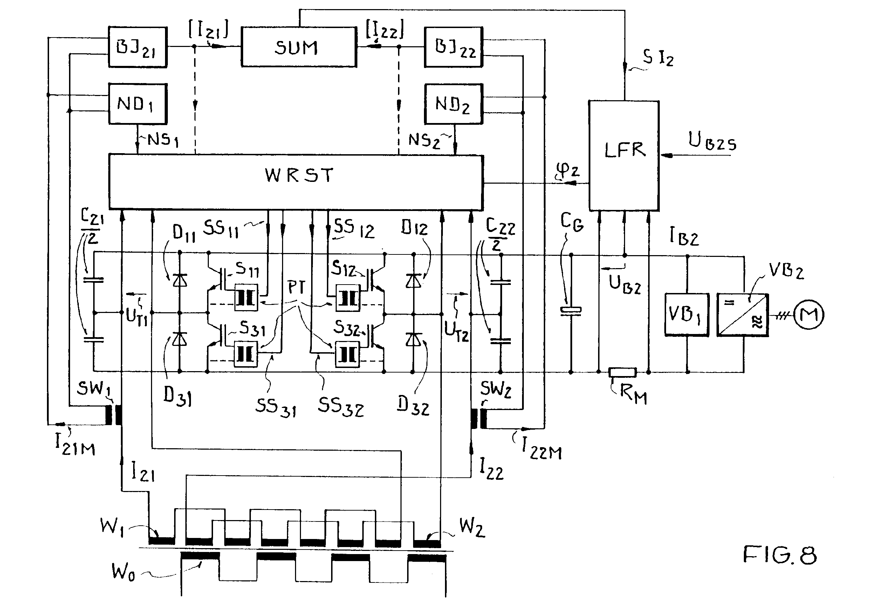

Fig. 8 zeigt das Ausführungsbeispiel eines auf dem bewegten System angeordneten Sekundärwechselrichters, welcher die oben beschriebene Einstellung des Steuerwinkels $\beta$ über den sekundärseitigen Lastwinkel $\varphi_2$ vornimmt, um bei beliebiger Belastung durch die Verbraucher VB1 und VB2 deren Betriebsgleichspannung $U_{B2}$ auf einen konstanten Wert zu regeln. Als Wechselrichter wird eine Halbbrückenschaltung für zwei sekundäre Wicklungsstränge W1 und W2 nach Fig. 3 verwendet.

Die steuerbaren Schalter S11, S31 und S12, S32 jeder Halbbrücke sind IGBTs (Insulated-Gate-Bipolar-Transistors), die von der Wechselrichtersteuerung WRST über Steuersignale SS11, SS31, SS12 und SS32 sowie Potentialtrennstufen PT ein- und ausgeschaltet werden. Die Dioden D11, D31, D12, D32 und die Kondensatoren C21/2, C22/2 haben die gleiche Funktion wie die entsprechenden Bauelemente in Fig. 3 und Fig. 5.

Die von der Statorwicklung $W_0$ auf die bewegten Sekundärwicklungen $W_1$ und $W_2$ übertragenen Ströme $I_{21}$ und $I_{22}$ und die diesen Strömen nach den Gleichungen (11) und (14) entsprechende Leistung werden durch den im Gleichrichterbetrieb arbeitenden Wechselrichter dem als Energiespeicher wirkenden Gleichspannungskondensator $C_G$ und den Verbrauchern VB1 und VB2 zugeführt. Die Verbraucher haben einen wechselnden Leistungsbedarf, insbesondere ändert sich bei dem als Frequenz-Umrichter-Antrieb ausgebildeten Verbraucher VB2 beim Abbremsen die Richtung des Leistungsflusses. Wie anhand der Figuren 2 und 3 gezeigt wurde, lösen sich die sekundärseitigen Ströme $I_{21}$ und $I_{22}$ bei der Bewegung gegenseitig ab. Zur Erfassung dieser Ströme sind an die Zuleitungen zu den Wicklungen $W_1$ und $W_2$ Stromwandler $SW_1$ und $SW_2$ geschaltet, die stromproportionale Meßsignale $I_{21M}$ und $I_{22M}$ zu Strombetrags-Erfassungseinrichtungen $BI_{21}$ und $BI_{22}$ sowie zu Nulldurchgangs-Erfassungseinrichtungen ND1 und ND2 senden. Diese von den Strombetrags-Erfassungseinrichtungen gebildeten Strombetragssignale $|I_{21}|$ und $|I_{22}|$ werden in einer Summierstufe summiert und das Stromsummensignal $SI_2$ einer Leistungsflußregelung LFR zugeführt.

Die Leistungsflußregelung erfaßt außerdem die Betriebsgleichspannung $U_{B2}$ sowie über den Meßwiderstand $R_M$ den Gesamtstrom $I_{B2}$ der Verbraucher uns somit deren Leistungsbedarf $P_2$. Wegen der bekannten linearen Beziehungen zwischen der Betriebsgleichspannung $U_{B2}$ und der Grundschwingung $U_{21}$ der Wechselrichterausgangsspannung sowie zwischen dem Stromsummensignal $SI_2$ und dem Wechselrichterstrom $I_2$ kann aie Lastflußregelung LFR nach der Beziehung

$$P_2 = U_{21} \cdot I_2 \cdot \cos\varphi_2 \tag{21}$$

den sekundärseitigen Winkel $_2$ ermitteln und der Wechselrichtersteuerung WRST zur Bildung der Steuersignale SS11, SS31, SS12, SS32 vorgeben.

Die Leistungsflußregelung LFR vergleicht außerdem die Betriebsgleichspannung $U_{B2}$ mit dem Sollwertsignal $U_{B25}$ und regelt die Differenz zwischen beiden Spannungen durch vorübergehende Änderungen des Winkels $\varphi_2$ zu Null.

Der Winkel $\varphi_2$ entspricht nach den Figuren 6 und 7 dem zeitlichen Abstand der Nulldurchgänge des Wechselrichterstromes $I_2$ und der Wechselrichterspannung $U_{21}$ wobei die Nulldurchgänge der Spannung $U_2$ durch das Schalten der Leistungshalbleiter S11, S31, S12 und S32 gegeben sind. Aus den Nulldurchgangssignalen NS1 und NS2 der sekundärseitigen Ströme $I_{21}$ und $I_{22}$, welche die Nulldurchgangserfassungseinrichtungen ND1 und ND2 an die Wechselrichtersteuerung WRST senden, und dem Winkel $\varphi_2$ bestimmt die Wechselrichtersteuerung WRST die Schaltzeitpunkte der steuerbaren Leistungshalbleiter.

Die anhand der Gleichungen und der Fig. 6 bis 7 dargestellten Winkellagen der Ströme und Spannungen gelten exakt für die Stellung maximaler Kopplung zwischen der ruhenden Wicklung $W_0$ und einer der Wicklungen auf dem bewegten System. Damit nun jeweils die Wicklung mit der maximalen Kopplung ausgewählt wird und in den Übergangsbereichen, das sind die Bereiche um die Schnittpunkte der Hüllkurven in Fig. 2, in denen $s\hat{U}_1(a)$ und $\hat{U}_2(a)$ in Fig. 2, in denen sich zwei Sekundärwicklungen und Wechselrichterzweige in der Stromführung ablösen, stellungsabhängige Korrekturen der Steuerwinkel durchführbar sind, werden die stellungabhängig amplitudenmodulierten Wicklungsspannungen $U_{T1}$ und $U_{T2}$ und falls erforderlich auch die in Fig. 8 gestrichelt dargestellten amplitudenmodulierten Strombetragssignale $|I_{21}|$ und $|I_{22}|$ der Wechselrichtersteuerung WRST zugeführt.

Die Kombination eines Resonanzübertragers mit annähernd konstantem Sekundärstrom und einem sekundärseitigen Wechselrichter ist ein vielseitig verwendbares Stellglied. Es prägt einem Verbraucher mit variabler Gegenspannung $U_{B2}$, die auch größer als die treibende Spannung $U_1$ sein kann, einen einstellbaren Strom ein, ohne daß die Gegenspannung eine nennenswerte Rückwirkung auf die eingestellte Stromstärke hat. Außerdem besteht die Möglichkeit, von einer kleineren Sekundärspannung $U_{B2}$ gegen eine größere Primärspannung $U_1$ Energie in den Stator zurückzuspeisen.

Ein derartiges Verhalten ist bei Antriebsstellgliedern erwünscht. Der sekundärseitige Wechselrichter kann die Zwischenkreisspannung an die EMK einer Dreh- oder Wanderfeldmaschine anpassen, so daß der dann wesentlich einfachere Antriebsumrichter nur noch die Strangströme fortschaltet. Bremsenergie wird in den Stator des Übertragungssystems und von dort in das Netz zurückgespeist.

Die parallele Speisung von Spulen oder Spulengruppen eines Übertragungsstators über eine Mittelfrequenz-Sammelleitung mit konstanter Spannung und das Einstellen der Leistung auf der Sekundärseite des Übertragungssystems sind die Voraussetzungen für die unabhängige Energieübertragung auf mehrere bewegte Sekundärsysteme über senselben Stator. Dabei können auch mehrere Teilstatoren über dieselbe Sammelleitung gespeist werden.

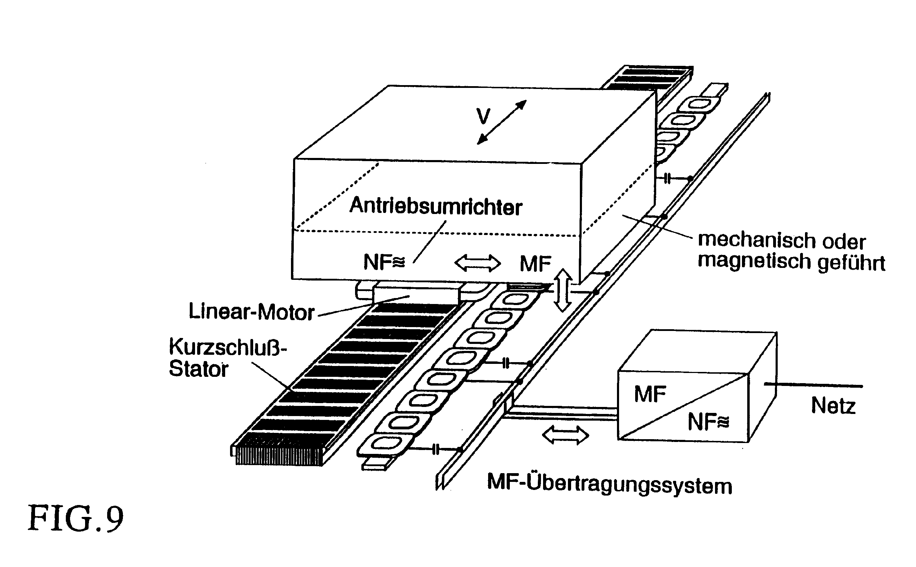

Linear bewegte Systeme können von Linearmotoren angetrieben werden. Bei konventionellen Langstatormotoren speist ein Umrichter die Antriebsleistung in die Statorwicklung. Dieser aktive Stator erzeugt ein magnetisches Wanderfeld und in Wechselrichtung mit einem Magnetfeld des bewegten Systems die Schubkraft. Eine induktive Energieübertragung gemäß der Erfindung ermöglicht es, mehrere bewegte Systeme mit eigenen Linearmotoren und Antriebsumrichtern auszurüsten und voneinander unabhängig über einen gemeinsamen passiven Stator anzutreiben (s. Fig. 9). Hierbei bestimmt das Motorprinzip den Aufbau des Stators. Bei einem linearen asynchronen Motor kann er beispielsweise als Kurzschlußstator mit in Nuten gegossenen kurzgeschlossenen Windungen aus Aluminium ausgeführt werden. Eine solche Kombination eines berührungslosen Mittelfrequenzübertragungssystems mit Linearantrieben bringt neben der Mehrfachausnutzung des Übertrager- und des Antriebsstators erhebliche Einsparungen an Wicklungskupfer und geringere Verluste.

Ein 25-kHz-Übertragerstator benötigt nur einen Bruchteil des für einen leistungsgleichen Antriebsstator mit Wanderfeldwicklung erforderlichen Materials. Dieser Unterschied wird umso größer, je langsamer die Geschwindigkeit des bewegten Systems ist, weil der Mittelfrequenzübertragerstator für die Leistung, der aktive Antriebsstator für die Schubkraft auszulegen ist. In Verbindung mit einem berührungslosen Übertragungssystem hat die material- und verlustintensive Wanderfeldwicklung nur die Länge des bewegen Systems.

Die erfindungsgemäße Anordnung zur berührungelosen induktiven Energieübertragung hat gegenüber den bekannten Anordnungen noch den weiteren Vorteil, daß nur in den Spulen des Stroms, die an der Leistungsübertragung auf ein Sekundärsystem beteiligt sind, der ganze Primärstrom $I_1$ nach Gleichung (17) fließt, während die von keinem Sekundärsystem bedeckten Statorspulen nur den kleineren Leerlaufstrom $I_0$ führen.

$$I_0 = j \frac{U_1}{X_{C1} - X_0} \tag{21}$$

In dieser Beziehung ist $X_0$ die Reaktanz der unbedeckten Spulen. Für das Verhältnis der Beträge des Leerlaufstromes zum Primärstrom bei $\varphi_2 = -180°$, d. h. Nennleistung erhält man aus den Gleichungen (8), (17) und (21):

$$\frac{|I_0|}{|I_{1N}|} = \frac{1}{1 + \frac{X_{01}}{X_M} - \frac{X_0}{X_M}} \cdot \frac{1}{\sqrt{V^2 + 1}} \tag{22}$$

Nach dieser Beziehung ist der auf den Primärstrom bei Nennleistung bezogene Leerlaufstrom um so kleiner, je größer das Spannungsverhältnis V, d. h. die Resonanzüberhöhung ist. Nimmt man beispielsweise für $V = \sqrt{2}$, für die auf die Hauptreaktanz $X_M$ des Resonanzübertragers bezogene primärseitige Streureaktanz $X_{01} / X_M = 0,1$ und für die relative Reaktanz der von keinem Sekundärsystem bedeckten Pole $X_0 / X_M = 0,4$ cm, so ergibt sich für dieses Beispiels

$$\frac{|I_0|}{|I_{1N}|} = 0,82.$$

Die Verluste der unbedeckten Spulen betragen daher nur 68 % der Verluste, die in den die Nennleistung übertragenden Spulen entstehen. Für die Kompensation des kapazitiven Leerlaufstromes $I_0$ durch die Induktivitäten $L_B$ bzw. $L_{BS}$ der Fig. 1 und 5 ist die auf die zu übertragende Nennleistung bezogene Leerlaufblindleistung

$$\frac{P_0}{P_N} = \frac{1}{1 + \frac{X_{01}}{X_M} - \frac{X_0}{X_M}} \cdot \frac{1}{V} \tag{23}$$

maßgebend.

Sie beträgt in dem obigen Beispiel

$$\frac{P_0}{P_N} = 1 \text{ kVA/kW}$$

Eine Induktivität mit etwa 1 kVA Blindleistung ist bei 25 kHz in einem Ferrittopfkern mit 40 mm Durchmesser und 30 mm Höhe realisierbar. Die Kern- und Wicklungsverluste betragen etwa 3 W.

Beim Übertragen der Nennleistung wird der Reihenkondensator C in den Figuren 1 und 9 bzw. C1 in Fig. 5 mit der größten Blindleistung

$$P_{CN} = |I_{1N}|^2 \cdot X_{C1} \tag{24}$$

belastet.

Auf die Nennleistung nach Gleichung (14) bezogen erhält man mit den Beziehungen (8) und (17):

$$\frac{P_{CN}}{P_N} = \left( 1 + \frac{X_{01}}{X_M} \right) \frac{V^2 + 1}{V}$$

Für die in diesem Beispiel gewählten Zahlenwerte sind:

$$\frac{P_{CN}}{P_N} = 2,3 \text{ kVA/kW}$$

Die Abschätzung des Kondensatorvolumens geht von metallisierten Polypropylen-Folienkondensatoren mit stirnseitiger Kontaktierung aus. Blindleistungen im kVA-Bereich sind in Rollenbauform mit Leistungsdichten bis 0,18 kVA/cm$^3$ ausgeführt. Ein Kondensator mit 2,3 kVA hat dann etwa eine Länge von 3 cm und einen Durchmesser von 2,4 cm. Die Verluste betragen bei einem Verlustwinkel tan $\delta = 3 \cdot 10^{-4}$ etwa 0,7 W.

**Patentansprüche**

1. Anordnung zur induktiven Übertragung von Energie im Bereich mittlerer Frequenz von einer ortsfesten primärseitigen als Stator bezeichneten Leiteranordnung (2a, 2b, 2c) auf einen mit sekundärseitigen Leiteranordnungen ausgerüsteten bewegbaren Verbraucher (3a, 3b), wobei die primärseitigen Leiter (2a, 2b, 2c) zu in der Bewegungsrichtung nebeneinanderliegenden Spulen ($W_0$) mit von Spule zu Spule wechselndem Umlaufsinn und zur Bewegungsebene senkrechter Spulenachse gewunden sind, so daß beim Fließen eines mittelfrequenten Stromes in den Spulen ein magnetisches Wechselfeld mit in Bewegungsrichtung von Spule zu Spule wechselnder Feldrichtung entsteht,
**dadurch gekennzeichnet**,
daß auf den bewegbaren Verbrauchern (3a, 3b) Spulen mit wechselndem Umlaufsinn in Reihe liegen, daß zu den Spulen der Primär- und Sekundärseite zur Kompensation der induktiven Spannungsabfälle Kondensatoren in Reihe geschaltet sind, daß eine oder mehrere Spulen des Stators in Gruppen (2a, 2b, 2c) mit je einem Kondensator C in Reihe geschaltet und die Gruppen parallel an eine Mittelfrequenzsammelleitung (1) angeschlossen sind, daß die Reaktanzen in jeder Gruppe so bemessen sind, daß die Reaktanz des Kondensators (C) den größten Wert hat und somit strombegrenzend wirkt, wenn die Gruppe an keinen Verbraucher gekoppelt ist, und daß bei induktiver Kopplung einer Gruppe an einen Verbraucher Kondensator und Spulen in Resonanz kommen, wobei der Leistungsfluß zwischen Stator und bewegtem Verbraucher erfolgt.

2. Anordnung nach Anspruch 1,
dadurch gekennzeichnet,
daß die Leiteranordnung auf der Primär- und Sekundärseite aus flachen spiralenförmigen Spulen bestehen und zum Erreichen einer guten magnetischen Kopplung auf plattenförmigen Ferritkörpern liegen.

3. Anordnung nach Anspruch 1 oder 2,
dadurch gekennzeichnet,
daß die Spulen auf der Primär- und/oder auf der Sekundärseite zum Erreichen der bestmöglichen magnetischen Kopplung in Nuten der plattenförmigen Ferritkörper eingelassen sind.

4. Anordnung nach Anspruch 1,
dadurch gekennzeichnet,
daß die Wicklungsstränge ($W_1$, $W_2$) auf den bewegbaren Verbrauchern zur Einstellung des Leistungsflusses zwischen dem Stator und den bewegbaren Verbrauchern an Wechselrichter mit abschaltbaren Leistungshalbleitern (S1 - S4, S11 - S32) und Gleichrichterdioden (D1 bis D4, D11 - D32) angeschlossen sind und das Einstellen der übertragenen Leistung durch Ändern des Phasenwinkels ($\varphi_2$) zwischen dem auf die sekundären Wicklungsstränge und die angeschlossenen Wechselrichter übertragenen Strom ($I_2$) und der von den Wechselrichtern erzeugten Spannung ($U_2$) erfolgt.

5. Anordnung nach Anspruch 1,
dadurch gekennzeichnet,
daß zu jedem Wicklungsstrang Kondensatoren ($C_2$,2 · $C_2$/2) in Reihe geschaltet sind, die mit den sekundärseitigen Streuinduktivitäten ($L_{02}$) der Übertrager Resonanzkreise bilden und den induktiven Spannungsabfall zu den sekundärseitigen Streuinduktivitäten kompensieren.

6. Anordnung nach Anspruch 4,
dadurch gekennzeichnet,
daß an die Gleichspannungsseite der Wechselrichter ein Antriebsumrichter zum Speisen eines Elektromotors angeschlossen ist, so daß die Wechselrichter und der Antriebsumrichter eine gemeinsame Zwischenkreisspannung ($U_{B2}$) haben, deren Höhe der augenblicklichen Drehzahl des Motors entspricht, und die Wechselrichter nach Maßgabe des einstellbaren Winkels ($\varphi_2$) zwischen Wechselrichterstrom ($I_2$) und Wechselrichterspannung ($U_2$) einen Leistungsfluß ($P_2$) entsprechend einer Leistungsgleichung (14) einstellen, der die Drehzahl des Motors konstant hält, erhöht oder vermindert, je nachdem ob die eingestellte Leistung ($P_2$) mit dem augenblicklichen Leistungsbedarf des Motors im Gleichgewicht steht, diesen über- oder unterschreitet.

7. Anordnung nach Anspruch 6,
dadurch gekennzeichnet,
daß an die Zwischenkreisspannung) ($U_{B2}$) der Ankerkreis eines Gleichstrommotors angeschlossen ist.

8. Anordnung nach Anspruch 6,
dadurch gekennzeichnet,
daß der Antriebsumrichter ein Wechselrichter ist, der ein Mehrphasensystem zum Betrieb von Dreh- und Wanderfeldmotoren erzeugt.

9. Anordnung nach Anspruch 1 oder 6,
dadurch gekennzeichnet,
daß der Motor ein Linearmotor mit einem passiven, d.h. als Reaktionschiene ausgebildetem Stator ist und im bewegten Teil eine vom Antriebsumrichter gespeiste Wanderfeldwicklung trägt.

10. Anordnung nach einem der Ansprüche 1 bis 9,
dadurch gekennzeichnet,
daß mehrere bewegbaren Verbraucher unabhängig voneinander über einen gemeinsamen induktiven Übertragungsstator berührungslos mit elektrischer Energie versorgt und an einem gemeinsamen passiven Antriebsstator unabhängig voneinander über Linearmotoren angetrieben werden.

11. Anordnung nach Anspruch 1,
dadurch gekennzeichnet,
daß die Sammelleitung (1) aus mehreren Schichten eines leitfähigen Materials besteht, wobei die gegeneinander isolierten Schichten abwechselnd entgegengesetzt vom Strom durchflossen werden und die Schichtdicke des leitenden Materials nach der Eindringtiefe des elektrischen Stroms bei höheren Frequenzen bemessen ist.

12. Anordnung nach Anspruch 1,

dadurch gekennzeichnet,
daß zur Kompensation des kapazitiven Leerlaufstroms ($I_0$) der an keinen bewegbaren Verbraucher gekoppelten Gruppen aus Statorspulen und in Reihe geschalteten Kondensatoren (C) Induktivität ($L_B$) zu diesen Gruppen parallel geschaltet sind.

**Claims**

1. Arrangement for the inductive transfer of energy in the middle frequency range from a stationary conductor arrangement (2a, 2b, 2c) at the primary side and designated as stator to a movable consumer (3a, 3b) equipped with conductor arrangements at the secondary side, wherein the conductors (2a, 2b, 2c) at the primary side are wound into coils ($W_0$), which are adjacent in the direction of movement, with alternating sense of turn from coil to coil and with coil axes perpendicular to the plane of movement so that on flow of a middle frequency current in the coils a magnetic alternating field arises with alternating field direction from coil to coil in the direction of movement, characterised thereby that coils with alternating sense of turn lie in series on the movable consumers (3a, 3b), that capacitors are connected in series to the coils of the primary side and secondary side for compensation for the inductive voltage decays, that one or more coils of the stator are connected in series in groups (2a, 2b, 2c) with a respective capacitor (C) and the groups are connected in parallel to a middle frequency collecting main (1), that the reactances in each group are so dimensioned that the reactance of the capacitor (C) has the greatest value and thus acts in a current-limiting manner when the group is not coupled to a consumer and that, on inductive coupling of a group to a consumer, capacitor and coils come into resonance, wherein the power flow between stator and moved consumer takes place.

2. Arrangement according to claim 1, characterised thereby that the conductor arrangements on the primary side and the secondary side consists of flat, spirally shaped coils and for attainment of a good magnetic coupling lie on plate-shaped ferrite bodies.

3. Arrangement according to claim 1 or claim 2, characterised thereby that the coils on the primary side and/or on the secondary side are let into grooves of the plate-shaped ferrite body for attainment of the best possible magnetic coupling.

4. Arrangement according to claim 1, characterised thereby that for setting of the power flow between the stator and the movable consumers the winding lines ($W_1$, $W_2$) on the movable consumers are connected to alternating current rectifiers with power semiconductors (S1 to S4, S11 to S32) able to be switched off and direct current rectifier diodes (D1 to D4, D11 to D32) and the setting of the transferred power is effected by varying the phase angle ($\varphi_2$) between the current ($I_2$) transferred to the secondary winding lines and the connected alternating current rectifiers and the voltage ($U_2$) generated by the alternating current rectifiers.

5. Arrangement according to claim 1, characterised thereby that capacitors ($C_2,2 - C_2/2$), which form resonance circuits with the secondary-side stray inductances ($L_{02}$) of the transformer and compensate for the inductive voltage decay to the secondary-side stray inductances, are connected in series to each winding line.

6. Arrangement according to claim 4, characterised thereby that a drive inverter for the current supply of an electric motor is connected to the direct voltage side of the alternating current rectifier, so that the alternating current rectifier and the drive transformer have a common intermediate circuit voltage ($U_{B2}$), the height of which corresponds to the instantaneous rotational speed of the motor, and the alternating current rectifier sets, in proportion to the settable angle ($\varphi_2$) between current ($I_2$) of the alternating current rectifier and voltage ($U_2$) of the alternating current rectifier, a power flow ($P_2$) corresponding to a power equalisation (14), which keeps the rotational speed of the motor constant, increases it or decreases it according to whether the set power ($P_2$) stands in equilibrium with the instantaneous power requirement of the motor, exceeds this or falls below this.

7. Arrangement according to claim 6, characterised thereby that the armature circuit of a direct current motor is connected to the intermediate voltage circuit ($U_{B2}$).

8. Arrangement according to claim 6, characterised thereby that the drive inverter is an alternating current rectifier, which produces a multi-phase system for the operation of rotary field and travelling wave motors.

9. Arrangement according to claim 1 or 6, characterised thereby that the motor is a linear motor with a passive stator, i.e. constructed as a reaction rail, and carries in the moved part a travelling wave winding supplied by the drive inverter.

**10.** Arrangement according to one of claims 1 to 9, characterised thereby that several movable consumers are supplied with electric energy independently of one another and contactlessly by way of a common inductive transfer stator and are driven at a common passive drive stator independently of one another by way of linear motors.

**11.** Arrangement according to claim 1, characterised thereby that the collecting main (1) consists of several layers of a conductive material, wherein the layers are insulated relative to one another and flowed through alternately and oppositely by current and the layer thickness of the conductive material is dimensioned according to the depth of penetration of the electric current at higher frequencies.

**12.** Arrangement according to claim 1, characterised thereby that for compensation for the capacitive no-load current ($I_0$) of the groups, which are not connected to any movable consumer, of stator coils and serially connected capacitors (C), inductances ($L_B$) are connected to these groups in parallel.

## Revendications

**1.** Dispositif de transmission inductive d'énergie dans la plage de fréquence moyenne depuis un dispositif de conducteur désigné par stator primaire fixe (2a, 2b, 2c) sur un appareil d'utilisation (3a, 3b) mobile équipé de dispositifs de conducteurs secondaires, les conducteurs primaires (2a, 2b, 2c) étant enroulés en bobines ($W_0$) juxtaposées dans la direction du déplacement, avec un sens de circulation alternant d'une bobine à l'autre, et selon un axe de bobine perpendiculaire au plan de déplacement, de sorte que, lors de la circulation d'un courant à moyenne fréquence dans les bobines, est obtenu un champ magnétique alternatif avec une direction de champ alternant dans la direction de déplacement d'une bobine à l'autre, caractérisé en ce que, sur les appareils d'utilisation mobiles (3a, 3b), se trouvent, en série, des bobines avec un sens de circulation alterné, en ce qu'aux bobines du côté primaire et du côté secondaire sont reliés, en série, en vue de la compensation des chutes de tension inductives, des condensateurs, en ce qu'une ou plusieurs bobines du stator sont montées en série en groupe (2a, 2b, 2c) avec chacune un condensateur C, et les groupes sont reliés en parallèle à une barre collectrice à moyenne fréquence (1), en ce que les réactances dans chaque groupe sont dimensionnées de sorte que la réactance du condensateur (C) présente la valeur maximale et ainsi limite le courant, lorsque le groupe n'est couplé à aucun appareil d'utilisation, et en ce que, dans le cas d'un couplage inductif d'un groupe à un appareil d'utilisation, le condensateur et les bobines entrent en résonance, la circulation de puissance s'effectuant entre le stator et l'appareil d'utilisation mobile.

**2.** Dispositif selon la revendication 1, caractérisé en ce que la disposition des conducteurs sur le côté primaire et sur le côté secondaire constitue des bobines hélicoïdales planes et, en vue de l'obtention d'un couplage magnétique satisfaisant, se trouve sur des éléments en ferrite sous forme de plaque.

**3.** Dispositif selon la revendication 1 ou 2, caractérisé en ce que les bobines sur le côté primaire et/ou sur le côté secondaire sont introduites en vue de l'obtention du couplage magnétique optimal dans des encoches des corps en ferrite sous forme de plaque.

**4.** Dispositif selon la revendication 1, caractérisé en ce que les phases d'enroulement ($W_1$, $W_2$) sur les appareils d'utilisation mobiles sont reliées, en vue du réglage de la circulation de la puissance entre le stator et les appareils d'utilisation mobiles, à un onduleur avec des semiconducteurs de puissance commandés (S1-S4, S11-S32) et des diodes redresseuses (D1 à D4, D11-D32) et le réglage de la puissance transmise s'effectue par variation de l'angle de phase ($\varphi_2$) entre le courant ($I_2$) transmis sur les phases d'enroulement secondaire et les onduleurs reliés et la tension ($U_2$) générée par les onduleurs.

**5.** Dispositif selon la revendication 1, caractérisé en ce qu'à chaque phase d'enroulement, sont montés en série des condensateurs ($C_2$,$2.C_2/2$) qui forment, avec les inductances de fuite secondaire ($L_{02}$) du transformateur, des circuits résonnants et compensent la chute de tension inductive aux inductances de dispersion secondaire.

**6.** Dispositif selon la revendication 4, caractérisé en ce que, sur le côté de la tension primaire de l'onduleur, est relié un convertisseur d'entraînement en vue de l'alimentation d'un moteur électrique, de sorte que l'onduleur et le convertisseur d'entraînement présentent une tension de circuit intermédiaire commune ($U_{B2}$), dont l'amplitude correspond à la vitesse de rotation instantanée du moteur, et les onduleurs règlent selon la valeur de l'angle réglable ($\varphi_2$) entre le courant d'onduleur ($I_2$) et la tension d'onduleur ($U_2$) une circulation de puissance ($P_2$) correspondant à une égalité de puissance (14), qui maintient la constante la vitesse de rotation du moteur, l'élève ou la réduit, selon que la puissance réglée ($P_2$) est en équilibre, dépasse ou se trouve en dessous du besoin de puissance instantanée du moteur.

**7.** Dispositif selon la revendication 6, caractérisé en ce qu'à la tension de circuit intermédiaire ($U_{B2}$) est relié le circuit d'induit d'un moteur à courant continu.

**8.** Dispositif selon la revendication 6, caractérisé en ce que le convertisseur d'entraînement est un onduleur, qui génère un système à phases multiples en vue de l'entraînement de moteur à champ rotatif et progressif.

**9.** Dispositif selon la revendication 1 ou 6, caractérisé en ce que le moteur est un moteur linéaire avec un stator passif, c'est-à-dire réalisé en tant que rail de réaction et porte dans la partie mobile un enroulement à champ progressif alimenté par le convertisseur d'entraînement.

**10.** Dispositif selon l'une des revendications 1 à 9, caractérisé en ce que plusieurs appareils d'utilisation mobiles sont alimentés indépendamment les uns des autres sans contact en énergie électrique par un stator de transmission inductif commun et sont entraînés par des moteurs linéaires indépendamment les uns des autres sur un stator d'entraînement passif commun.

**11.** Dispositif selon la revendication 1, caractérisé en ce que la barre collectrice (1) se compose de plusieurs couches d'un matériau conducteur, les couches isolées les unes des autres étant parcourues en alternance de façon opposée par un courant, et l'épaisseur de couches du matériau conducteur est dimensionnée selon la profondeur de pénétration du courant électrique à des fréquences élevées.

**12.** Dispositif selon la revendication 1, caractérisé en ce qu'en vue de la compensation du courant à vide capacitif ($I_0$) des groupes de bobines de stator couplées à aucun appareil d'utilisation mobile et des condensateurs (C) montés en série sont montés en parallèle à l'inductance ($N_B$) à ces groupes.

FIG.1

EP 0 666 804 B1

FIG.2

EP 0 666 804 B1

FIG.3

3 Stränge
1 WR mit 3 Halbbrückenzweigen

2 Stränge
2 WR in Halbbrückenschaltung

FIG.4

$U_C$    $U\sigma_1$    $U\sigma_2$

$L\sigma_1$    $L\sigma_2$

C

$U_1$    $U_T$    $U_h$    M    $U_2$

$I_L$    $I\mu$    $I_2$

$U_C$

C

$U_1$    $U_T$    $L_0$

$I_0$

$L_{\sigma 1} < L_0 < M$

$U_C$

$L\sigma_1$

C

$U_1$    $U_T$    M

$I_S$

$I\mu$    $I_L$

$U\sigma_2$    $U_C$

$U\sigma_1$    $U_1$

$I_2, U_2$

$U_T$    $U_h$    $I\mu$

Nennlast

$U_C$

$U_T$

$U_T$    $U_1$

$U_1$    $U_C$

$U_C$

$I_0$    $I_S$

Leerlauf ohne
Sekundärsystem

Leerlauf mit
Sekundärsystem

EP 0 666 804 B1

$U_{LW}$   $U_{CW}$   $I_W$   $I_1$   $I_2$

$L_W$   $C_W$   $I_P$   $U_{B1}$   $U_W$   $C_P$   $I_{BS}$   $L_{BS}$   $C_S$   $I_{OS}$   $L_{OS}$   $C_1$   $L_{o1}$   $U_1$   $U_h$   $M$   $L_{o2}$   $I_\mu$   $C_2$   $U_2$   D2 S2 $U_{B2}$ S1 D1   D4 S4 S3 D3

Primär-
Wechselrichter
       Übertragungsstrecke
E-Speicher
       Resonanzübertrager
       bewegter
Sekundär-WR.

$I_P$    $I_{OS} = (n-m)\, I_0$    $U_{LW}$   $U_{CW}$

$I_{BS} = n \cdot I_B$    $U_W$   $U_1$   $I_1 = m \cdot I_L$   $I_W$   $\varphi_1$

## FIG.5

EP 0 666 804 B1

FIG.6

a) $\beta_N = 81°$
$\varphi_{2N} = -180°$
Gleichrichterbetrieb

b) $\beta = 40°$
$\varphi_2 = -136°$

c) $\beta = 0°$
$\varphi_1, \varphi_2 = -90°$

e) $\beta = -81°$
$\varphi_2 = 0°$
Wechselrichterbetrieb

d) $\beta = -40°$
$\varphi_2 = -44°$

$\beta$ = Steuerwinkel, $\varphi_2$ = Lastwinkel

FIG.7

FIG.8

EP 0 666 804 B1

FIG.9